# EUROPÄISCHE PATENTSCHRIFT

(11) **EP 2 675 709 B1**
(45) Veröffentlichungstag und Bekanntmachung des Hinweises auf die Patenterteilung: **01.07.2015**
(21) Anmeldenummer: 12700973.6
(22) Anmeldetag: 23.01.2012
(51) Int. Cl.: B64D 9/00

(54) **FRACHTLADESYSTEM UND VERFAHREN ZUR STEUERUNG EINER VIELZAHL VON FRACHTFÖRDEREINRICHTUNGEN**
CARGO LOADING SYSTEM AND METHOD FOR CONTROLLING A MULTIPLE ROLLER CONVEYOR
SYSTÈME DE CHARGEMENT DU CARGO ET MÉTHODE DE COMMANDE D'UN CONVOYEUR MULTIPLE

(30) Priorität: 18.02.2011 DE 102011000820
(43) Veröffentlichungstag der Anmeldung: 25.12.2013
(73) Patentinhaber: Telair International GmbH, 83714 Miesbach (DE)
(72) Erfinder: HUBER, Thomas, 83727 Schliersee (DE)
(74) Vertreter: Bohnenberger, Johannes
(86) Internationale Anmeldenummer: PCT/EP2012/050953
(87) Internationale Veröffentlichungsnummer: WO 2012/110282

(56) Entgegenhaltungen:
- EP-A2- 0 937 643
- GB-A- 2 443 554
- US-A1- 2009 121 085

## Beschreibung

Die Erfindung betrifft ein Frachtladesystem und ein Verfahren zur Steuerung einer Vielzahl von Frachtfördereinrichtungen auf einem Frachtdeck.

Zum Transport von Luftfracht werden die zu transportierenden Frachtstücke, insbesondere Container oder Paletten, die vorzugsweise nach bestimmten Normen gefertigt sind, innerhalb des Frachtraums mittels Riegelelementen am Frachtdeck des Frachtraums befestigt. Derartige Riegelelemente bilden häufig Frachtladebahnen aus, zwischen denen die genormten Frachtstücke positioniert werden können. Um die Frachtstücke an den für sie vorgesehenen Positionen zu positionieren, werden Ladesysteme oder Frachtladesysteme verwendet, die das Bodenpersonal beim Be- und Entladen unterstützen. Die Ladesysteme sollen den Be- und Entladevorgang beschleunigen und verfügen häufig über eine Vielzahl von Aktuatoren und Sensoren sowie über einen Steuercomputer, der dazu ausgebildet ist, die empfangenen Signale auszuwerten, gegebenenfalls auszugeben und eine geeignete Steuerstrategie für die Aktuatoren zu implementieren. Die verwendeten Ladesysteme müssen sehr einfach zu bedienen sein, da das Bodenpersonal häufig keine Einweisungen bezüglich eines spezifischen Frachtladesystems genossen hat. Hinzu kommt, dass sowohl das Be- als auch das Entladen unter hohem Zeitdruck geschieht, wodurch es leicht zu einer Fehlbedienung kommen kann. Derartige Fehlbedienungen müssen zwingend verhindert werden. Ein defektes Frachtladesystem, sei es aufgrund von Fehlbedienung oder aufgrund von einer natürlichen Abnutzung, kann zu erheblichen Kosten führen, da das Unterhalten von Großraumflugzeugen sehr teuer ist. Jede Minute, die ein Großraumflugzeug auf dem Boden verbringt, kostet den Betreiber Geld. Des Weiteren kann ein defektes Frachtladesystem oder eine Fehlbedienung dazu führen, dass beispielsweise Abschnitte des Frachtladeraums beschädigt werden. Eine Instandsetzung des Frachtladeraums ist sehr teuer.

Um den Be- und Entladevorgang möglichst effizient zu gestalten, verfügen die Frachtdecke über Kugelmatten, die es ermöglichen, die Frachtstücke mit geringem Kraftaufwand auf dem Frachtdeck zu transportieren. Des Weiteren sind Frachtfördereinrichtungen (PDUs: Power Drive Units) vorgesehen, die die für den Transport notwendige Kraft aufbringen. Der Steuercomputer steuert diese Frachtfördereinrichtungen an, um vorzugsweise ein im Wesentlichen automatisches Be- und Entladen zu ermöglichen. Dennoch kann bei dem Be- und Entladen von Flugzeugen auf das Bodenpersonal nicht verzichtet werden, da viele Ladevorgänge aufgrund von unterschiedlichen Abmessungen der Frachtstücke, Überständen, usw. sehr individuell sind. So verfügen auch moderne Frachtladesysteme über Eingabeeinrichtungen, die es dem Bodenpersonal ermöglichen, Steuerbefehle an den Steuercomputer abzugeben.

Die DE 10 2008 052 468 A1 zeigt beispielsweise ein Frachtladesystem für ein Flugzeug, das einen Steuercomputer und eine Vielzahl von mit dem Steuercomputer kommunikativ verbundene Frachtfördereinrichtungen umfasst. Der Steuercomputer betreibt die Frachtfördereinrichtungen derart, dass die Frachtstücke in geeigneter Weise auf dem Frachtdeck des Flugzeugs positioniert werden. Die DE 10 2008 052 468 A1 beschreibt des Weiteren eine Fernbedienung, die es dem Benutzer ermöglicht, sich frei auf dem Frachtdeck zu bewegen und geeignete Steuerbefehle in Form von Steuersignalen abzugeben. Die Handhabung dieser Fernbedienung ist relativ aufwändig. Ein weiteres Frachtladesystem ist aus der EP 0 937 643 bekannt.

Entsprechende Frachtladesysteme werden auch in Logistikzentren eingesetzt. Derartige Logistikzentren findet man beispielsweise auf den großen Umschlagflughäfen, die täglich tausende von Frachtstücken aufnehmen und in geeigneter Weise zur Weiterbeförderung weiterleiten. Auch in entsprechenden Logistikzentren sind häufig Frachtdecks vorgesehen, die mit entsprechenden Rollen ausgestattet sind, um die Frachtstücke mit möglichst geringer Reibung zu befördern. Auch hier können Frachtfördereinrichtungen vorgesehen werden, die mit einem Steuercomputer kommunizieren, um die Frachtstücke in geeigneter Weise auf dem Frachtdeck zu transportieren. Im Endeffekt ergeben sich für die Frachtladesysteme in den Logistikzentren ähnliche Anforderungen, wie diese bereits weiter oben beschrieben wurden. Insbesondere ist es notwendig, deren Bedienung möglichst einfach zu gestalten.

Ausgehend von der DE 2008 052 468 A1 ist es Aufgabe der vorliegenden Erfindung, ein Frachtladesystem bereitzustellen, das sich einfach und effizient bedienen lässt. Des Weiteren soll ein entsprechendes Verfahren zur Steuerung einer Vielzahl von Frachtfördereinrichtungen eines Frachtladesystems bereitgestellt werden.

Diese Aufgabe wird durch ein Frachtladesystem gemäß dem Anspruch 1 gelöst.

Insbesondere wird die Aufgabe durch ein Frachtladesystem gelöst, das umfasst:
- ein Frachtdeck mit einer Vielzahl von Frachtfördereinrichtungen;
- eine Steuereinheit, die zur Förderung von mindestens einem Frachtstück auf dem Frachtdeck in kommunikativer Verbindung mit den Frachtfördereinrichtungen steht;
- eine Fernbedienung, die zur Ausgabe von Steuersignalen an die Steuereinheit in kommunikativer Verbindung mit der Steuereinheit steht.

Ein wesentlicher Gedanke der vorliegenden Erfindung besteht darin, die Steuereinheit mit einer Positionsbestimmungseinheit zur Bestimmung einer Fernbedienungsposition auf dem Frachtdeck und/oder der Ausrichtung der Fernbedienung auszustatten, wobei die Steuereinheit dazu ausgebildet ist, eine Menge von Frachtfördereinrichtungen auszuwählen und diese in Abhängigkeit von den empfangenen Steuersignalen und der Fernbedienungsposition und/oder Ausrichtung der Fernbedienung anzutreiben.

Das erfindungsgemäße Frachtladesystem kann also sowohl in Flugzeugen sowie an beliebig anderer Stelle, insbesondere in Logistikzentren, eingesetzt werden. Eine Kernidee der Erfindung besteht darin, dass die Steuereinheit die genaue oder ungefähre Position und/oder die genaue oder ungefähre Ausrichtung der Fernbedienung kennt und in Abhängigkeit von diesen Parametern von der Fernbedienung ausgegebene Steuersignale unterschiedlich interpretiert. Hierdurch ist es möglich, die Fernbedienung wesentlich einfacher zu gestalten, da beispielsweise die Auswahl des auf dem Frachtdeck zu fördernden Frachtstücks automatisch erfolgen kann. Beispielsweise kann die Steuereinheit davon ausgehen, dass stets das Frachtstück gefördert werden soll, das der Fernbedienung am nächsten ist.

Es ist zwar denkbar, die Fernbedienung kabelgebunden mit der Steuereinheit kommunizieren zu lassen, vorzugsweise erfolgt jedoch eine kabellose Kommunikation. Die Fernbedienung kann dazu ausgebildet sein, die Steuersignale zumindest abschnittsweise drahtlos, insbesondere mittels Lichtwellen, an die Steuereinheit zu übermitteln. Insofern ist es dem Benutzer möglich, sich frei auf dem Frachtdeck zu bewegen.

Die Positionsbestimmungseinheit kann zur Bestimmung mindestens einer Frachtstückposition des mindestens einen Frachtstücks auf dem Frachtdeck ausgebildet sein, wobei die Steuereinheit dazu ausgebildet ist, die Frachtfördereinrichtungen in Abhängigkeit von den empfangenen Steuersignalen, der Fernbedienungsposition und/oder Ausrichtung der Fernbedienung und der Position des mindestens einen Frachtstücks anzutreiben.

Soweit die Steuereinheit sowohl die Position der Fernbedienung und/oder deren Ausrichtung sowie die Position des mindestens einen Frachtstücks kennt, können diese Parameter bei der Auslegung der Steuersignale berücksichtigt werden. Es ist z.B. einfach möglich, das dem Benutzer am nächsten stehende Frachtstück oder das Frachtstück, das er unmittelbar anschaut, zu bestimmen. Die Steuereinheit kann derart konfiguriert werden, dass sie davon ausgeht, dass sich die Steuersignale, die mittels der Fernbedienung ausgegeben werden, stets auf das Frachtstück beziehen, das von dem Benutzer angesehen wird, auf das die Fernbedienung zeigt und/oder das der Fernbedienung am nächsten ist.

Die Steuereinrichtung kann dazu ausgebildet sein, die Fernbedienungsposition und/oder die Ausrichtung der Fernbedienung relativ zu dem mindestens einen Frachtstück zu berücksichtigen. Es ist aber auch möglich, die Funktionsweise der Fernbedienung in Abhängigkeit von der relativen Position und/oder Ausrichtung abzuändern.

Die Fernbedienung kann mindestens eine erste Betätigungseinrichtung umfassen, der ein Folgesteuersignal zugeordnet ist, wobei die Steuereinrichtung dazu ausgebildet ist, beim Empfangen des Folge-Steuersignals eine Förderrichtung zu bestimmen, bei der das mindestens eine Frachtstück in Richtung auf die Fernbedienungsposition zu gefördert wird, und die Fördereinrichtung derart ansteuert, dass das mindestens eine Frachtstück in die berechnete Förderrichtung transportiert wird.

Die Fernbedienung kann also wie eine "elektronische Kleine" verwendet werden, wobei ein Betätigen der ersten Betätigungseinrichtung dazu führt, dass Steuersignale ausgegeben werden, die die Steuereinrichtung dazu veranlassen, dass ein ausgewähltes Frachtstück auf den Benutzer oder die Position der Fernbedienung zufährt. Insofern kann der Bediener dem Frachtstück vorausgehen und durch das Betätigen der ersten Betätigungseinrichtung ein ausgewähltes Frachtstück veranlassen, ihm zu folgen. Die eigentliche Ansteuerung der Frachtfördereinrichtungen und die Auswahl einer geeigneten Förderrichtung muss also nicht mehr von dem Benutzer getroffen werden, da die Steuereinrichtung die Position des Frachtstücks sowie die Position der Fernbedienung und möglicherweise deren Ausrichtung kennt.

Dementsprechend kann die Fernbedienung mindestens eine zweite Betätigungseinrichtung umfassen, der ein Zurück-Steuersignal zugeordnet ist, wobei die Steuereinrichtung dazu ausgebildet ist, beim Empfangen des Zurück-Steuersignals eine Förderrichtung zu bestimmen, bei der das mindestens eine Frachtstück in eine Richtung von der Fernbedienungsposition weg gefördert wird, und die Fördereinrichtungen derart ansteuert, dass das mindestens eine Frachtstück in die berechnete Förderrichtung transportiert wird. In ähnlicher Weise kann die Fernbedienung also über eine zweite Betätigungseinrichtung verfügen, deren Betätigung dazu führt, dass Steuersignale ausgegeben werden, die die Steuereinheit veranlassen, ein ausgewähltes Frachtstück von dem Benutzer oder der Fernbedienung weg zu fördern. Insofern wäre es beispielsweise denkbar, dass der Benutzer hinter dem Frachtstück hergeht und dieses vor sich herführt. Vorzugsweise wird dieser zweite Förderungsmodus dazu verwendet, um Frachtstücke beispielsweise in eine Lücke einzuparken, ohne dass Gefahr für den Benutzer besteht. Theoretisch ist es denkbar, eine oder mehrere weitere Betätigungseinrichtungen vorzusehen, die eine Drehung des Frachtstücks ermöglichen. Auch hier könnte theoretisch die Förderstrategie, die die Steuereinrichtung implementiert, von der Position und/oder der Ausrichtung der Fernbedienung relativ zu dem Frachtstück abhängen.

Des Weiteren ist es möglich, durch ein Erfassen der Position der Fernbedienung verschiedene Sicherheitsmechanismen zu implementieren, die es ermöglichen, den Benutzer sowie das verwendete Equipment zu schützen. Beispielsweise kann die Steuereinrichtung eine Distanzermittlungseinrichtung zur Bestimmung einer Ist-Distanz zwischen der Frachtstückposition und der Fernbedienungsposition umfassen und dazu ausgebildet sein, zumindest die ausgewählte Menge von Frachtfördereinrichtungen zu deaktivieren, wenn die Ist-Distanz kleiner einer vorgegebenen Sicherheitsdistanz ist. So kann es beispielsweise vermieden werden, dass der Benutzer von einem Frachtstück überfahren wird. Des Weiteren ist es denkbar, die erfindungsgemäße Lehre auf einem Frachtdeck einzusetzen, bei dem eine Vielzahl von Benutzern mit einer Vielzahl von Fernbedienungen tätig sind. Durch ein Berücksichtigen der Distanz zwischen den Fernbedienungen und den Frachtstücken können auch Unfälle vermieden werden, bei denen ein Benutzer von einem "fremden" Frachtstück überfahren wird.

Die Steuerung kann dazu ausgebildet sein, anhand der Fernbedienungsposition und der Ausrichtung der Fernbedienung aus einer Vielzahl von Frachtstücken eines auszuwählen, das gemäß den Steuersignalen gefördert werden soll. Insofern vereinfacht die erfindungsgemäße Lehre, die Steuersignale einem bestimmten Frachtstück zuzuordnen, auf das sich diese beziehen sollen.

Das Frachtladesystem kann eine Vielzahl von Empfangseinheiten zum Empfangen der Steuersignale umfassen, die vorzugsweise flächendeckend auf dem Frachtdeck angeordnet sind, wobei die Positionsbestimmungseinrichtung die Positionen der Empfangseinheiten kennt und anhand der Positionen der Empfangseinheiten, die ein von der Fernbedienung ausgegebenes Steuersignal empfängt, die Fernbedienungsposition bestimmt. Theoretisch ist es möglich, die Position des Benutzers der Fernbedienung oder der Fernbedienung selbst anhand von zusätzlichen Einrichtungen (z.B. GPS oder lokalen Positionsbestimmungssystemen) zu ermitteln. Vorzugsweise wird die Position jedoch mit einer ausreichenden Genauigkeit dadurch ermittelt, dass die Steuersignale nur von einer oder von wenigen Empfangseinheiten aus einer Vielzahl von Empfangseinheiten empfangen werden. Die Positionen der Empfangseinheiten, die die Steuersignale empfangen, ergeben einen ausreichend genauen Aufschluss über die Positionen der Fernbedienung bzw. die Position des Benutzers der Fernbedienung. Es ist denkbar, die Sendeleistung der Fernbedienung derart zu reduzieren, dass nur sehr wenige vorzugsweise nur eine Empfangseinheit in einer bestimmten Position die Steuersignale empfängt. Theoretisch können die Empfangseinheiten auch dazu ausgebildet sein, dem empfangenen Steuersignal eine Richtung aus der dieses empfangen wird zuzuordnen, so dass zum einen die Positionsbestimmung genauer wird, zum anderen Rückschlüsse auf die Ausrichtung der Fernbedienung gezogen werden können. Theoretisch ist es des Weiteren möglich, die Sendeeinheit der Fernbedienung derart auszubilden, dass sich einzelne Empfangseinheiten gezielt ansprechen lassen. Insbesondere bei der Verwendung von Infrarotsignalen ist dies ohne Weiteres möglich. Insofern kann der Benutzer mit der Fernbedienung auf eine bestimmte Empfangseinheit, die beispielsweise einem bestimmten Frachtstück zugeordnet ist, zielen und hierdurch die Auswahl eines Frachtstücks vornehmen.

Die oben genannte Aufgabe wird des Weiteren durch ein Verfahren gemäß dem Anspruch 10 gelöst.

Insbesondere wird die Aufgabe durch ein Verfahren zur Steuerung einer Vielzahl von Frachtfördereinrichtungen eines Frachtladesystems, insbesondere eines Frachtladesystems wie dieses bereits beschrieben wurde, gelöst, wobei das Verfahren die folgenden Schritte umfasst:
- Empfangen eines Steuersignals von einer Fernbedienung, insbesondere mittels einer IR-Empfangseinrichtung;
- Bestimmen mindestens einer Fernbedienungsposition der Fernbedienung;
- Bestimmen mindestens einer Frachtstückposition mindestens eines Frachtstücks auf einem Frachtdeck;
- Auswählen einer Menge von auf dem Frachtdeck angeordneten Frachtfördereinrichtungen;
- Bestimmen einer Förderrichtung für jede Frachtfördereinrichtung aus der ausgewählten Menge in Abhängigkeit von dem empfangenen Steuersignal, der Fernbedienung und der Frachtstückposition;
- Antreiben der Frachtfördereinrichtungen in die jeweilige Förderrichtung.

Verfahrensgemäß sollen also die Fernbedienungspositionen und gegebenenfalls die Frachtstückposition bei der Interpretation des empfangenen Steuersignals oder der empfangenen Steuersignale berücksichtigt werden. Durch das Berücksichtigen dieser Parameter kann sowohl der Bedienungskomfort sowie die Sicherheit bei der Steuerung der Vielzahl von Frachtfördereinrichtungen erhöht werden.

Die ausgewählte Menge von Frachtfördereinrichtungen kann in Abhängigkeit der bestimmten Fernbedienungsposition und/oder einer Ausrichtung der Fernbedienung vorgenommen werden. Es ist also möglich, nicht nur die Art und Weise, wie ein bestimmtes Frachtstück in Reaktion auf den Empfang eines bestimmten Steuersignals gefördert wird durch die Positionsdaten zu beeinflussen, sondern auch die Auswahl des zu fördernden Frachtstücks kann von diesen Daten abhängen.

Das Bestimmen der Fernbedienungsposition kann ein Bestimmen einer Primärempfangseinheit aus einer Vielzahl von auf oder nahe dem Frachtdeck angeordneten Empfangseinheiten und ein Ermitteln der Position der Primärempfangseinheit auf dem Frachtdeck umfassen, wobei die Primärempfangseinheit die Empfangseinheit ist, die das Steuersignal von der Fernbedienung empfängt. Natürlich ist es denkbar, dass mehrere Empfangseinheiten ein bestimmtes Steuersignal empfangen. In diesem Fall könnte beispielsweise die Empfangseinheit als die Primärempfangseinheit angesehen werden, die das Steuersignal am stärksten empfängt. Durch das vorgegebene Verfahren kann die Position der Fernbedienung in einfacher Weise ermittelt werden.

Das Verfahren kann ein Berechnen einer Ist-Distanz zwischen der Frachtstückposition und der Fernbedienungsposition umfassen, wobei die ausgewählten Frachtfördereinrichtungen nur dann angetrieben werden, wenn die Ist-Distanz größer ist als eine vorgegebene Sicherheitsdistanz. Insofern können Sicherheitsmechanismen zum Schutz des Benutzers und des Equipments implementiert werden.

Das Verfahren kann ein Berechnen mindestens eines Frachtabstands zwischen einem ersten Frachtstück und einem zweiten Frachtstück umfassen, wobei die ausgewählten Frachtfördereinrichtungen nur dann angetrieben werden, wenn der berechnete Frachtabstand zwischen dem ersten und dem zweiten Frachtstück zwischen dem sich die Fernbedienung gemäß der bestimmten Fernbedienungsposition befindet größer als ein vorgegebener Sicherheitsabstand ist.

Weitere vorteilhafte Ausführungsformen ergeben sich anhand der Unteransprüche.

Nachfolgend wird die Erfindung mittels mehrerer Ausführungsbeispiele beschrieben, die mittels mehreren Abbildungen näher verdeutlicht werden.

Hierbei zeigen:
- Fig. 1: eine Draufsicht auf einen Abschnitt eines Frachtdecks eines Flugzeugs mit zahlreichen Frachtfördereinrichtungen;
- Fig. 2: eine Detailansicht einer Frachtfördereinrichtung aus Fig. 1;
- Fig. 3: eine Detailansicht einer weiteren Frachtfördereinrichtung;
- Fig. 4: eine Draufsicht auf ein Frachtdeck in einem Logistikzentrum;
- Fig. 5: eine schematische Darstellung einzelner Komponenten des Frachtladesystems;
- Fig. 6: eine schematische Darstellung eines Frachtstücks; und
- Fig. 7: eine Fernbedienung zur Ausgabe von Steuersignalen für einen Steuercomputer.

In der nachfolgenden Beschreibung werden für gleiche und gleich wirkende Teile dieselben Bezugsziffern verwendet.

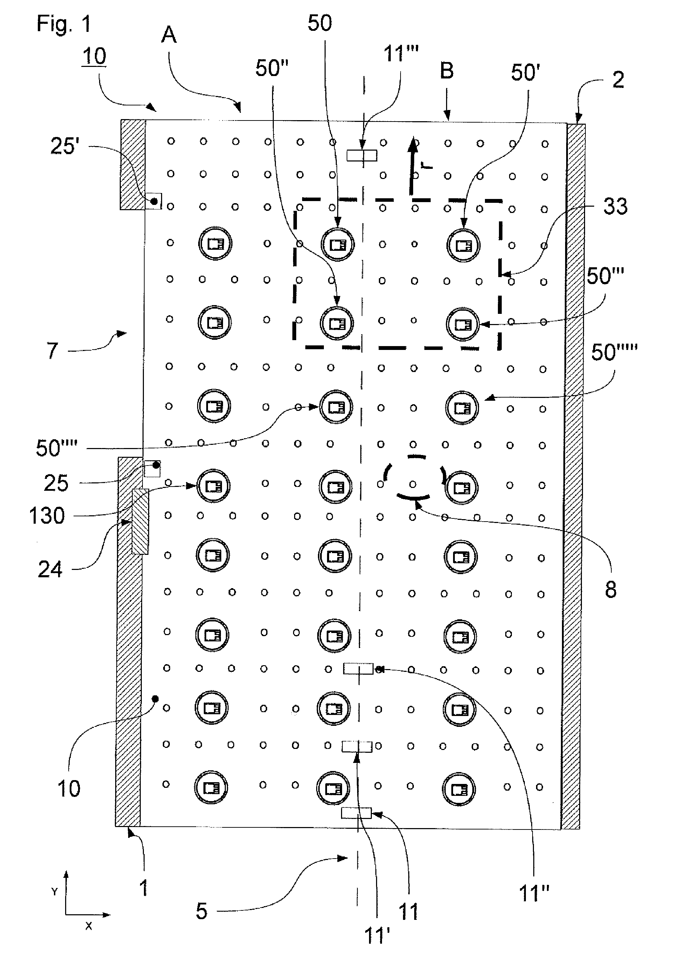

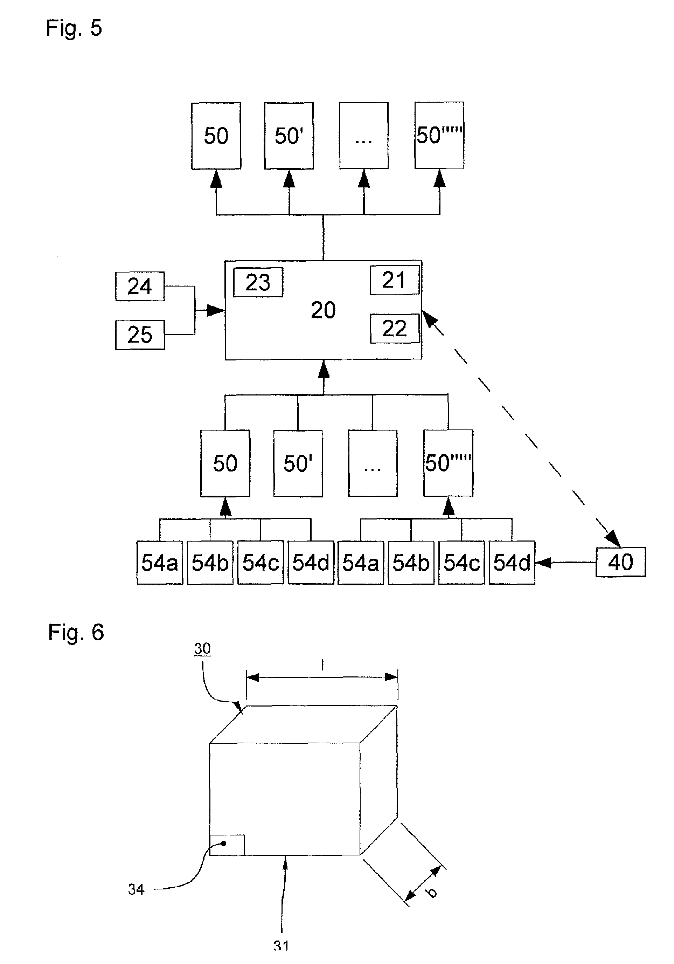

Die Fig. 1 zeigt eine Draufsicht auf ein Frachtdeck 10 mit einem erfindungsgemäßen Frachtladesystem. Der gezeigte Abschnitt des Frachtdecks 10 ist im Wesentlichen rechteckig und erstreckt sich in der X-Y-Ebene (die Y-Richtung entspricht der Längsrichtung des Flugzeugs und die X-Richtung der Querrichtung) des Flugzeugs und ist durch eine linke Seitenwand 1 und eine rechte Seitenwand 2 begrenzt. Die linke Seitenwand 1 ist abschnittsweise zur Bildung einer Türöffnung 7 unterbrochen und weist eine Eingabeeinrichtung 24 zur Eingabe von Steuerbefehlen auf. Durch die Türöffnung 7 kann ein Frachtcontainer 30 in den Frachtraum eingebracht werden. Das erfindungsgemäße Frachtladesystem ist besonders dafür geeignet, Frachtcontainer effizient auf dem Frachtdeck 10 zu fördern, wobei eine ständige Überwachung durch einen Benutzer erfolgen kann. Ein entsprechender Frachtcontainer 30 ist beispielsweise in Fig. 6 abgebildet und hat eine Länge I, eine Breite b und eine vorgegebene Höhe h.

Das Frachtdeck 10 des in Fig. 1 gezeigten Flugzeugs ist so konfiguriert, dass eine erste Frachtladebahn A und eine zweite Frachtladebahn B zur Aufnahme einzelner Frachtcontainer 30 bereitstehen. Hierfür sind entlang einer Mittelebene 5 des Frachtdecks 10 Mittelriegel 11, 11', 11", 11'" angeordnet. Die Frachtladebahnen A, B haben eine Breite, die im Wesentlichen mit der Breite b des Frachtcontainers 30 korrespondiert. Üblicherweise sind weitere Funktionselemente vorgesehen, um die Frachtcontainer 30 in geeigneter Weise in den Frachtladebahnen A, B zu fixieren. Das Frachtdeck 10 ist mit Kugelmatten ausgestattet, so dass die Frachtcontainer 30 mit relativ geringem Widerstand auf diesem befördert werden können. Des Weiteren ist ein Netz von Frachtfördereinrichtungen 50 bis 50""' vorgesehen, um Frachtcontainer 30 anzutreiben. Vorzugsweise sind die Frachtfördereinrichtung 50 bis 50""' so über das Frachtdeck 10 verteilt, dass ein zu verladender Frachtcontainer 30 mit einem Frachtbodenumriss 33 unabhängig von seiner Position stets mit mindestens einer Frachtfördereinrichtung 50 bis 50""" in Eingriff steht. Da der Be- und Entladebereich häufig zum Drehen und Ausrichten der Frachtcontainer 30 verwendet wird, können hier eine höhere Anzahl von Frachtfördereinrichtungen 50 bis 50""' vorgesehen werden.

Wechselseitig zur Türöffnung 7 sind RFID-Sensoreinrichtungen 25, 25' angeordnet, die ein RFID-Tag 34 am Frachtcontainer 30 (vgl. Fig. 6) erfassen können. Insofern ist es einem mit den RFID-Sensoreinrichtungen 25, 25' verbundenen Steuercomputer 20 (vgl. Fig. 5) möglich, einen einfahrenden Frachtcontainer 30 eindeutig zu identifizieren. Eine gewonnene Identifikationsnummer kann dazu verwendet werden, die Frachtcontainerbreite b und die Frachtcontainerlänge I - also die Abmessungen - des Frachtcontainers 30 zu bestimmen. Alternativ kann das RFID-Tag 34 konkrete Informationen bezüglich dieser Abmessung umfassen. In einem weiteren Ausführungsbeispiel kann ein Laserscanner an der Türöffnung 7 oder an einer beliebigen anderen geeigneten Position angeordnet sein, um die Abmessung des einfahrenden Frachtcontainers 30 zu bestimmen. Sowohl die RFID-Sensoreinrichtungen 25, 25' sowie ein entsprechender Laserscanner sind eine rein optionale Ausstattung des erfindungsgemäßen Frachtladesystems, die es erleichtert, die Position der Frachtcontainer 30 auf dem Frachtdeck 10 vorzunehmen. Eine entsprechende Frachtstückpositionsbestimmung kann aber auch ohne diese Einrichtungen vorgenommen werden.

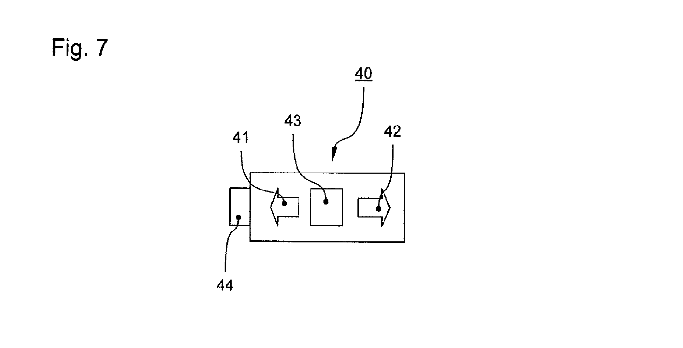

In einem ersten Ausführungsbeispiel der Erfindung kennt der Steuercomputer 20 die Position des Frachtcontainers 30 (vgl. Frachtbodenumriss 33) und eines Benutzers (vgl. Benutzerumriss 8), der eine Fernbedienung 40 (vgl. Fig. 7) in der Hand hält. Eine entsprechende Fernbedienung 40 kann verschiedene Bedieneinheiten, nämlich eine Vortaste 41, eine Zurücktaste 42 und eine Rotationstaste 43 umfassen. Des Weiteren ist eine Fernbedienungssendeeinheit 44 an dieser vorgesehen, die es ermöglicht, mit dem Steuercomputer 20 mittelbar oder unmittelbar zu kommunizieren. Durch die Fernbedienung 40 können also Steuersignale in Abhängigkeit von der betätigten Bedieneinrichtung ausgegeben werden. Erfindungsgemäß ist der Steuercomputer 20 derart ausgebildet, dass bei einem Betätigen der Vortaste 41 ein ausgewählter Frachtcontainer 30 auf den Benutzer zu fährt, während ein Betätigen der Zurücktaste 42 dazu führt, dass der ausgewählte Frachtcontainer 30 sich von dem Benutzer entfernt.

Betrachtet man beispielsweise das in Fig. 1 gezeigte Ausführungsbeispiel mit dem Benutzerumriss 8 und dem Frachtbodenumriss 33, so führt ein Betätigen der Zurücktaste 42 dazu, dass der Steuercomputer eine Förderrichtung r berechnet, die das Frachtstück, insbesondere den Frachtcontainer 30, von dem Benutzer weg fördert. Im konkret gezeigten Ausführungsbeispiel führt das Betätigen der Zurücktaste 42 dazu, dass der Steuercomputer 20 die Förderrichtung r berechnet, eine von dem Frachtcontainer 30 überdeckte Menge von Frachtfördereinrichtungen, nämlich eine erste Frachtfördereinrichtung 50, eine zweite Frachtfördereinrichtung 50', eine dritte Frachtfördereinrichtung 50" und eine vierte Frachtfördereinrichtung 50"' auswählt, diese derart ausrichtet und antreibt, dass der Frachtcontainer 30 in die Förderrichtung r gefahren wird.

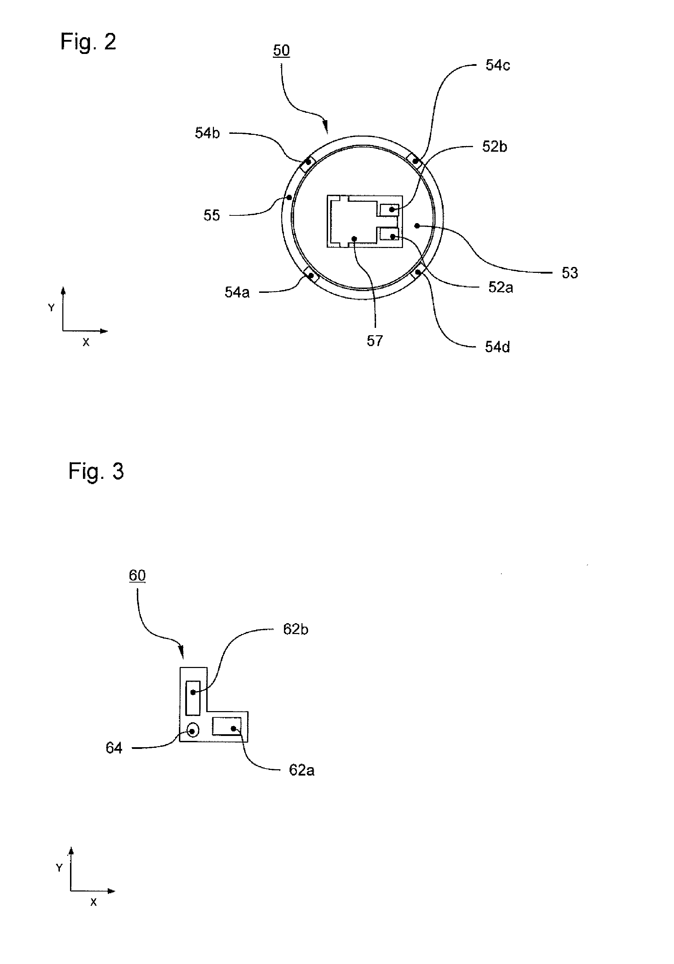

In dem Ausführungsbeispiel stehen die Frachtfördereinrichtungen 50 bis 50'"" über einen Bus (z.B. ein CAN-Bus) in kommunikativer Verbindung mit dem Steuercomputer 20 und dienen diesem als Sensoren und Aktuatoren. Wie in Fig. 2 gezeigt, setzt sich eine Frachtfördereinrichtung 50 aus einem ringförmigen Rahmen 55 und einem kreisförmigen, im Rahmen 55 angeordneten Rotationsteller 53 zusammen. Der Rotationsteller 53 ist derart drehbeweglich innerhalb des Rahmens 55 gelagert, dass sich dieser in der X-Y-Ebene um eine Rotationsachse drehen lässt. Die Frachtfördereinrichtung 50 weist entsprechende Aktuatoren und Sensoren auf, so dass der Rotationsteller 53 innerhalb des Rahmens 55 beliebig ausgerichtet werden kann. Sensoren geben Aufschluss über die Ausrichtung des Rotationstellers 53 innerhalb des Rahmens 55.

Der Rotationsteller 53 beherbergt eine Rollenantriebseinheit 57, die die Antriebsrollen 52a, 52b antreibt. Die Antriebsrollen 52a, 52b sind dazu ausgebildet, Frachtcontainer 30 in eine Richtung quer zur Drehachse der Antriebsrollen 52a, 52b im Wesentlichen innerhalb der X-Y-Ebene anzutreiben. Es sollte für den hier tätigen Fachmann offensichtlich sein, dass sich der Frachtcontainer 30 durch ein Antreiben der Antriebsrollen 52a, 52b in eine entgegengesetzte Drehrichtung in die entgegengesetzte Richtung transportieren lässt.

Die Frachtfördereinrichtung 50 sowie jede andere Frachtfördereinrichtung 50' bis 50""' kann des Weiteren vier Lichtsensoren 54a, 54b, 54c, 54d umfassen, die an dem Rahmen 55 angeordnet sind. Insofern beeinflusst die Ausrichtung des Rotationstellers 53 die Position der Lichtsensoren 54a, 54b, 54c, 54d nicht. Vorzugsweise sind die Lichtsensoren 54a, 54b, 54c, 54d paarweise jeweils auf der gegenüberliegenden Seite des Rahmens 105 angeordnet. So befindet sich der erste Lichtsensor 54a im 45 Grad-Bereich der Frachtfördereinrichtung 50, der zweite Lichtsensor 54b im 135 Grad-Bereich, der dritte Lichtsensor 54c im 225 Grad-Bereich und der vierte Lichtsensor 54d im 315 Grad-Bereich. Die Lichtsensoren 54a, 54b, 54c, 54d umfassen lichtemittierende Dioden und Fotodioden, so dass die Lichtsensoren 54a, 54b, 54c, 54d dazu geeignet sind, das Vorhandensein eines Frachtstücks, insbesondere eines Frachtcontainers, unmittelbar oberhalb der Lichtsensoren 54a, 54b, 54c, 54d zu detektieren. Anhand der jeweils an den Frachtfördereinrichtungen 50 bis 50""' vorgesehenen Lichtsensoren 54a, 54b, 54c, 54d kann der Steuercomputer 20 relativ genau feststellen, ob und wie weit eine bestimmte Frachtfördereinrichtung 50 bis 50""' von einem Frachtcontainer 30 überdeckt wird. Insofern ist es dem Steuercomputer 20 möglich, anhand dieser Informationen eine relativ genaue Positionsbestimmung des Frachtcontainers 30 vorzunehmen.

Des Weiteren können die Lichtsensoren 54a, 54b, 54c, 54d dazu ausgebildet sein, die Steuersignale der Fernbedienung 40, die über die Fernbedienungssendeeinheit 44 ausgegeben werden, zu empfangen. Diese Steuersignale werden dann über den Bus an den Steuercomputer 20 weitergegeben.

Im beschriebenen Ausführungsbeispiel ist die Sendeleistung der Fernbedienungssendeeinheit 44 derart schwach, dass die Steuersignale nur innerhalb eines Radius von wenigen Metern (z.B. bis zu 2 m) empfangen werden können. Je nach Ausrichtung der Fernbedienung werden also die der Betätigung der Zurücktaste 42 zugeordneten Steuersignale lediglich von den Lichtsensoren 54a, 54b, 54c, 54d der fünften oder sechsten Frachtfördereinrichtung 50"", 50""' empfangen. Bereits diese Information reicht aus, um eine ungefähre Position und Ausrichtung der Fernbedienung 40 auf dem Frachtdeck 10 zu bestimmen. So weiß der Steuercomputer 20 bei einer Auswertung dieser Informationen, dass sich der Benutzer mit der Fernbedienung 40 in der Bildebene unterhalb des Frachtbodenumrisses 33 - also des Frachtcontainers 30 - befindet. Insofern reichen die gewonnenen Informationen aus, um die Förderrichtung r in Abhängigkeit von der Position der Fernbedienung 40 zu bestimmen.

Das bereits beschriebene Beispiel lässt sich anhand der Fig. 5, die die einzelnen Komponenten des Frachtladesystems zeigen, näher verdeutlichen. Die Steuersignale der Fernbedienung 40 werden also beispielsweise von der sechsten Frachtfördereinrichtung 50""', insbesondere von dem Lichtsensor 54 empfangen und an den Steuercomputer 20 weitergegeben. Insofern erfolgt eine mittelbare Kommunikation mit dem Steuercomputer 20. Der Steuercomputer 20 umfasst eine Positionsbestimmungseinrichtung 23, die feststellt, von welcher Frachtfördereinrichtung 50 bis 50""' die Steuersignale empfangen wurden. In einer Speichereinrichtung 21 sind die einzelnen Positionen der einzelnen Frachtfördereinrichtungen 50 bis 50""' gespeichert, so dass die Positionsbestimmungseinrichtung 23 aufgrund der Identifikation der sechsten Frachtfördereinrichtung 50""' eine Position der Fernbedienung 40 bestimmen kann. Die Positionsbestimmungseinrichtung 23 fragt danach die Lichtsensoren 54a, 54b, 54c, 54d sämtlicher Frachtfördereinrichtungen 50 bis 50""' ab und kann feststellen, welche dieser Lichtsensoren 54a, 54b, 54c, 54d von einem Frachtcontainer 30 überdeckt werden. Da der Steuercomputer 20 aufgrund der RFID-Sensoreinrichtung 25 die Abmessung des Frachtcontainers 30 kennt, kann eine relativ genaue Positionsbestimmung des Frachtcontainers 30 wiederum unter Berücksichtigung der Positionen der vom Frachtcontainer 30 überdeckten Frachtfördereinrichtungen 50 bis 50""' vorgenommen werden. Der Steuercomputer 20 kann also mittels eines Modellgenerators 22 ein Modell des Frachtcontainers 30 generieren, das der Positionsbestimmungseinrichtung 23 die Positionsbestimmung erleichtert.

Soweit die Position des Frachtcontainers 30 und die der Fernbedienung 40 bestimmt wurden, kann der Steuercomputer 20 die Steuersignale auswerten und unter Berücksichtigung dieser Positionen interpretieren, so dass die erste Frachtfördereinrichtung 50, die zweite Frachtfördereinrichtung 50', die dritte Frachtfördereinrichtung 50" und die vierte Frachtfördereinrichtung 50"' ausgewählt und derart aktiviert werden können, dass der Frachtcontainer 30 in die Frachtförderrichtung r gefördert wird.

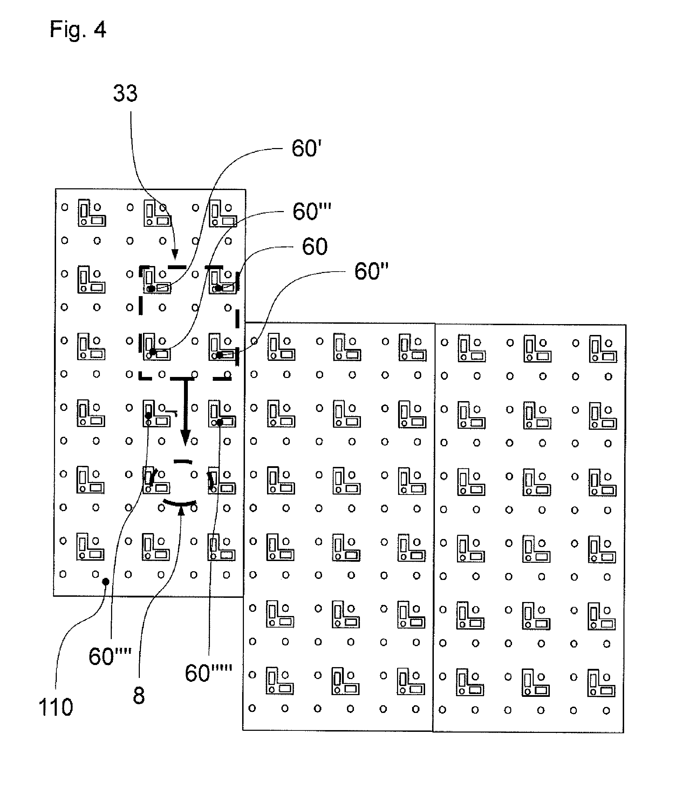

Fig. 4 zeigt ein zweites Ausführungsbeispiel eines erfindungsgemäßen Frachtladesystems. Dieses befindet sich in einem Logistikzentrum, das als Umschlagplatz für Frachtcontainer 30 dient. Hier können Frachtcontainer 30 zwischengelagert oder von einem bestimmten Eingang zu einem bestimmten Ausgang gefördert werden. Die Fig. 4 zeigt ein aus mehreren Elementen bestehendes Frachtdeck 110, das wie auch das Frachtdeck 10 mit Rollenbahnen ausgestattet ist. Auf dem Frachtdeck 110 sind Frachtfördereinrichtungen 60 bis 60""' in einem Raster angeordnet, die sich von den Frachtfördereinrichtungen 50 bis 50""' in ihrer Ausgestaltung unterscheiden.

Die Fig. 3 zeigt eine schematische Draufsicht auf eine erste Frachtfördereinrichtung 60, die eine erste Antriebsrolle 62a und eine zweite Antriebsrolle 62b umfasst. Die Antriebsrollen 62a, 62b sind derart angeordnet, dass sie jeweils im 90 Grad-Winkel zueinander stehen. Mittels der Frachtfördereinrichtung 60 lässt sich also ein Frachtstück, insbesondere ein Frachtcontainer 30, in die Y-Richtung oder in die X-Richtung schieben, wobei durch ein Ändern der Drehrichtung auch ein Verschieben in die entgegengesetzte X- oder Y-Richtung möglich ist. Die Frachtfördereinrichtung 60 ist des Weiteren mit einem Lichtsensor 64 ausgestattet, der wiederum wie auch die Lichtsensoren 54a, 54b, 54c, 54d mindestens eine lichtemittierende Diode und mindestens eine Fotodiode enthält. Insofern ist auch die Frachtfördereinrichtung 60 dazu geeignet festzustellen, wann eine bestimmte Frachtfördereinrichtung 60 bis 60""' von einem Frachtcontainer 30 überdeckt wird. Auch der Lichtsensor 64 kann als Empfangseinheit für die Steuersignale der Fernbedienung 40 ausgebildet sein. Alternativ können zusätzliche Empfangseinheiten an den Frachtfördereinrichtungen 60 bis 60""' für das Steuersignal der Fernbedienung 40 vorgesehen werden. Es ist ebenfalls denkbar, diese Empfangseinheiten unabhängig von den Positionen der Frachtfördereinrichtungen 60 bis 60""' auf dem Frachtdeck 110 zu verteilen.

Auch die Frachtfördereinrichtungen 60 bis 60""' kommunizieren mit einem Steuercomputer 20 ähnlich dem Steuercomputer 20, wie dieser aus Fig. 5 bekannt ist. Auch der Steuercomputer 20 gemäß dem Ausführungsbeispiel aus Fig. 4 ermöglicht es, Steuersignale, die in Reaktion auf die Betätigung der Vortaste 41, der Zurücktaste 42 oder der Rotationstaste 43 ausgesandt werden, in Abhängigkeit von der Position der Fernbedienung 40 zu interpretieren. Das Ausführungsbeispiel gemäß Fig. 4 unterscheidet sich darin, dass eine Positionsbestimmung nicht anhand der Empfangseinheiten vorgenommen wird. So verfügt die Fernbedienung 40 gemäß dem Ausführungsbeispiel aus Fig. 4 über ein GPS-System, das die aktuelle Position der Fernbedienung 40 an den Steuercomputer 20 weitergeben kann.

Betätigt also beispielsweise der durch die Benutzerumrisse 8 gekennzeichnete Benutzer der Fernbedienung 40 die Vortaste 41, so ermittelt die GPS-Einrichtung die genauen Koordinaten der Fernbedienung 40. Diese werden in Verbindung mit entsprechenden Steuersignalen an den Steuercomputer 20 übermittelt. Wie bereits vorab beschrieben, ermittelt der Steuercomputer 20 des Weiteren die exakte Position des Frachtcontainers 30 (vgl. Frachtbodenumriss 33). Der Steuercomputer 20 stellt fest, dass der Frachtcontainer 30 auf den Benutzer zu gefördert werden soll und ermittelt die Förderrichtung r, die diesen Wunsch erfüllt. Der Steuercomputer 20 wählt dann eine erste Frachtfördereinrichtung 60, eine zweite Frachtfördereinrichtung 60', eine dritte Fördereinrichtung 60" und eine vierte Fördereinrichtung 60"' aus, um diese Bewegung des Frachtcontainers 30 umzusetzen.

In entsprechender Weise können Rotationen bei der Betätigung der Rotationstaste 43 oder Rückwärtsbewegungen bei der Betätigung der Zurücktaste 42 umgesetzt werden.

In den vorab beschriebenen Ausführungsbeispielen wurde eine Kommunikation zwischen dem Steuercomputer 20 und der Fernbedienung 40 stets mittelbar über eine Frachtfördereinrichtung 50 bis 50""', 60 bis 60""' gewährleistet. Es ist natürlich ohne Weiteres möglich, eine Kommunikation in drahtloser oder drahtgebundener Form unmittelbar zwischen dem Steuercomputer 20 und der Fernbedienung 40 zu etablieren. Für eine drahtlose Kommunikation können beispielsweise Lichtwellen oder elektromagnetische Wellen verwendet werden. In einem bevorzugten Ausführungsbeispiel wird mit Infrarotsignalen gearbeitet.

In den vorab beschriebenen Ausführungsbeispielen wurde eine Positionsbestimmung des Frachtcontainers 30 anhand von Lichtsensoren 54a, 54b, 54c, 54d, 64 vorgenommen. Dem hier tätigen Fachmann sollten zahlreiche Möglichkeiten bekannt sein, wie die Position eines Frachtcontainers 30 auf einem Frachtdeck 10, auf andere Weise bestimmt werden kann. Beispielsweise können Lichtschranken oder GPS-Empfänger vorgesehen werden. Auch der Einsatz von mechanischen Sensoren ist denkbar.

Vorab wurden zwei Verfahren beschrieben, wie die Position der Fernbedienung 40 bestimmt werden kann. Für den hier tätigen Fachmann ergeben sich weitere Möglichkeiten, die ohne Weiteres bei der Umsetzung der Erfindung integriert werden können.

### Bezugszeichenliste

- 1, 2: Seitenwand
- 5: Mittelebene
- 7: Türöffnung
- 8: Benutzerumriss
- 10, 110: Frachtdeck
- 11, 11',11'',11''': Mittelriegel
- 20: Steuercomputer
- 21: Speichereinrichtung
- 22: Modellgenerator
- 23: Positionsbestimmungseinrichtung
- 24: Eingabeeinrichtung
- 25: RFID-Sensoreinrichtung
- 30: Frachtcontainer
- 31: Frachtboden
- 33: Frachtbodenumriss
- 40: Fernbedienung
- 41: Vortaste
- 42: Zurücktaste
- 43: Rotationstaste
- 44: Fernbedienungssendeeinrichtung
- 50 bis 50''''': Frachtfördereinrichtung
- 52a, 52b: Antriebsrollen
- 53: Rotationsteller
- 54a, 54b, 54, 54d: Lichtsensor
- 55: Rahmen
- 57: Rollenantriebseinheit
- 60 bis 60''''': Frachtfördereinrichtung
- 62a, 62b: Antriebsrolle
- 64: Lichtsensor
- r: Förderrichtung
- I: Frachtcontainerlänge
- b: Frachtcontainerbreite
- A: Frachtladebahn A
- B: Frachtladebahn B

## Patentansprüche

1. Frachtladesystem, umfassend:
- ein Frachtdeck (10, 110) mit einer Vielzahl von Frachtfördereinrichtungen (50-50""', 60-60""');
- eine Steuereinheit (20), die zur Förderung von mindestens einem Frachtstück (30) auf dem Frachtdeck (10, 110) in kommunikativer Verbindung mit den Frachtfördereinrichtungen (50-50""', 60-60""') steht;
- eine Fernbedienung (40), die zur Ausgabe von Steuersignalen an die Steuereinheit (20) in kommunikativer Verbindung mit der Steuereinheit (20) steht;
**dadurch gekennzeichnet, dass**
die Steuereinheit (20) eine Positionsbestimmungseinheit (23) zur Bestimmung einer Fernbedienungsposition auf dem Frachtdeck (10, 110) und/oder der Ausrichtung der Fernbedienung (40) umfasst, wobei die Steuereinheit (20) dazu ausgebildet ist eine Menge von Frachtfördereinrichtungen (50-50""', 60-60""') auszuwählen und diese in Abhängigkeit von den empfangenen Steuersignalen und der Fernbedienungsposition und/oder Ausrichtung der Fernbedienung (40) anzutreiben.

2. Frachtladesystem nach Anspruch 1,
**dadurch gekennzeichnet, dass**
die Fernbedienung (40) dazu ausgebildet ist die Steuersignale zumindest Abschnittsweise drahtlos, mittels Lichtwellen, an die Steuereinheit (20) zu übermitteln.

3. Frachtladesystem nach einem der vorhergehenden Ansprüche,
**dadurch gekennzeichnet, dass**
die Positionsbestimmungseinheit (23) zur Bestimmung mindestens einer Frachtstückposition des mindestens einen Frachtstücks (30) auf dem Frachtdeck (10, 110) ausgebildet ist, wobei die Steuereinheit (20) dazu ausgebildet ist, die Frachtfördereinrichtungen (50-50""', 60-60""') in Abhängigkeit von den empfangenen Steuersignalen, der Fernbedienungsposition und/oder Ausrichtung der Fernbedienung (40) und der Position des mindestens einen Frachtstücks (30) anzutreiben.

4. Frachtladesystem nach Anspruch 3,
**dadurch gekennzeichnet, dass**
die Steuereinrichtung (20) dazu ausgebildet ist, die Fernbedienungsposition und/oder die Ausrichtung der Fernbedienung (40) relativ zu dem mindestens einen Frachtstück (30) zu berücksichtigen.

5. Frachtladesystem nach Anspruch 3 oder 4,
**dadurch gekennzeichnet, dass**
die Fernbedienung (40) mindestens eine erste Betätigungseinrichtung (41) umfasst, der ein Folge-Steuersignal zugeordnet ist, wobei die Steuereinrichtung (20) dazu ausgebildet ist, beim Empfangen des Folge-Steuersignals eine Förderrichtung zu bestimmen, bei der das mindestens eine Frachtstück (30) in Richtung auf die Fernbedienungsposition zu gefördert wird, und die Fördereinrichtungen (50-50""', 60-60""') derart ansteuert, dass das mindestens eine Frachtstück (30) in die berechnete Förderrichtung transportiert wird.

6. Frachtladesystem nach Anspruch 5,
**dadurch gekennzeichnet, dass**
die Fernbedienung (40) mindestens eine zweite Betätigungseinrichtung (42) umfasst, der ein Zurück-Steuersignal zugeordnet ist, wobei die Steuereinrichtung (20) dazu ausgebildet ist, beim Empfangen des Zurück-Steuersignals eine Förderrichtung zu bestimmen, bei der das mindestens eine Frachtstück (30) in eine Richtung von der Fernbedienungsposition weg gefördert wird, und die Fördereinrichtungen (50-50""', 60-60""') derart ansteuert, dass das mindestens eine Frachtstück (30) in die berechnete Förderrichtung transportiert wird.

7. Frachtladesystem nach einem der Ansprüche 3 bis 6,
**dadurch gekennzeichnet, dass**
die Steuereinrichtung (20) eine Distanzermittlungseinrichtung zur Bestimmung einer Ist-Distanz zwischen der Frachtstückposition und der Fernbedienungsposition umfasst und dazu ausgebildet ist, zumindest die ausgewählte Menge von Frachtfördereinrichtungen (50-50"", 60-60""') zu deaktivieren, wenn die Ist-Distanz kleiner einer vorgegebenen Sicherheitsdistanz ist.

8. Frachtladesystem nach einem der vorhergehenden Ansprüche,
**dadurch gekennzeichnet, dass**
die Steuereinrichtung (20) dazu ausgebildet ist, anhand der Fernbedienungsposition und der Ausrichtung der Fernbedienung (40) aus einer Vielzahl von Frachtstücken (30) eines auszuwählen, das gemäß den Steuersignalen gefördert werden soll.

9. Frachtladesystem nach einem der vorhergehenden Ansprüche,
**gekennzeichnet durch**
eine Vielzahl von Empfangseinheiten (54a, 54b, 54c, 54d, 64) zum Empfangen der Steuersignale, die flächendeckend auf dem Frachtdeck (10, 110) angeordnet sind, wobei die Positionsbestimmungseinrichtung (23) die Positionen der Empfangseinheiten (54a, 54b, 54c, 54d, 64) kennt und anhand der Position der Empfangseinheit (54a, 54b, 54c, 54d, 64), die ein von der Fernbedienung (40) ausgegebenes Steuersignal empfängt, die Fernbedienungsposition bestimmt.

10. Verfahren zur Steuerung einer Vielzahl von Frachtfördereinrichtungen (50-50""', 60-60""') eines Frachtladesystems, umfassend die Schritte:
- Empfangen eines Steuersignals von einer Fernbedienung (40);
- Bestimmen mindestens einer Fernbedienungsposition der Fernbedienung (40);
- Bestimmen mindestens einer Frachtstückposition mindestens eines Frachtstücks (30) auf einem Frachtdeck (10, 110);
- Auswählen einer Menge von auf dem Frachtdeck (10, 110) angeordneten Frachtfördereinrichtungen (50-50""', 60-60""');
- Bestimmen einer Förderrichtung für jede Frachtfördereinrichtung (50-50""', 60-60""') aus der ausgewählten Menge in Abhängigkeit von dem empfangenen Steuersignal, der Fernbedienungsposition und der Frachtstückposition;
- Antreiben der Frachtfördereinrichtungen (50-50""', 60-60""') in die jeweilige Förderrichtung.

11. Verfahren nach Anspruch 10,
**dadurch gekennzeichnet, dass**
das Auswählen der Menge von Frachtfördereinrichtungen (50-50""', 60-60""') in Abhängigkeit der bestimmten Fernbedienungsposition und/oder einer Ausrichtung der Fernbedienung (40) vorgenommen wird.

12. Verfahren nach Anspruch 10 oder 11
**dadurch gekennzeichnet, dass**
das Bestimmen der Fernbedienungsposition ein Bestimmen einer Primärempfangseinheit aus einer Vielzahl von auf oder nahe dem Frachtdeck angeordneten Empfangseinheiten (54a, 54b, 54c, 54d, 64) und ein Ermitteln der Position der Primärempfangseinheit auf dem Frachtdeck (10, 110) umfasst, wobei die Primärempfangseinheit die Empfangseinheit (54a, 54b, 54c, 54d, 64) ist, die das Steuersignal von der Fernbedienung (40) empfängt.

13. Verfahren nach einem der Ansprüche 10 bis 12,
**gekennzeichnet durch**
ein Berechnen einer Ist-Distanz zwischen der Frachtstückposition und Fernbedienungsposition, wobei die ausgewählten Frachtfördereinrichtungen (50-50""', 60-60""') nur dann angetrieben werden, wenn die Ist-Distanz größer ist als eine vorgegebene Sicherheitsdistanz.

14. Verfahren nach einem der Ansprüche 10 bis 13
**gekennzeichnet durch**
ein Berechnen mindestens eines Frachtabstands zwischen einem ersten Frachtstücks (30) und einem zweiten Frachtstück (30), wobei die ausgewählten Frachtfördereinrichtungen (50-50""', 60-60""') nur dann angetrieben werden, wenn der berechnete Frachtabstand zwischen dem ersten und dem zweiten Frachtstück (30), zwischen dem sich die Fernbedienung (40) gemäß der bestimmten Fernbedienungsposition befindet, größer als ein vorgegebener Sicherheitsabstand ist.

## Claims

1. Cargo loading system, comprising:
- a cargo deck (10, 110) with a plurality of freight conveying devices (50-50""", 60-60""");
- a control unit (20) which, for conveying at least one cargo item (30) on the cargo deck (10, 110), is communicatively connected to the freight conveying devices (50-50""", 60-60""");
- a remote control (40) which, for outputting control signals to the control unit (20), is communicatively connected to said control unit (20);
**characterised in that**
the control unit (20) comprises a position determination unit (23) for determining a remote control position on the cargo deck (10, 110) and/or the alignment of the remote control (40), wherein the control unit (20) is designed to select a quantity of freight conveying devices (50-50""", 60-60""") and to propel them as a function of the received control signals and the remote control position and/or alignment of the remote control (40).

2. Cargo loading system according to claim 1, **characterised in that** the remote control (40) is designed to transmit the control signals wirelessly at least in portions, by means of light waves, to the control unit (20).

3. Cargo loading system according to one of the preceding claims, **characterised in that** the position determination unit (23) for determining at least one cargo item position of the at least one cargo item (30) on the cargo deck (10, 110), wherein the control unit (20) is designed to propel the freight conveying devices (50-50""", 60-60""") as a function of the received control signals, the remote control position and/or alignment of the remote control (40) and of the position of the at least one cargo item (30).

4. Cargo loading system according to claim 3, **characterised in that** the control unit (20) is designed to take account of the remote control position and/or the alignment of the remote control (40) relative to the at least one cargo item (30).

5. Cargo loading system according to claim 3 or 4, **characterised in that** the remote control (40) comprises as least one first actuating device (41) to which a follow control signal is assigned, wherein the control unit (20) is designed, on receiving the follow control signal, to determine a conveying direction, in which the at least one cargo item (30) is conveyed towards the remote control position, and actuates the freight conveying devices (50-50""", 60-60""") in such a manner that the at least one cargo item (30) is transported in the calculated conveying direction.

6. Cargo loading system according to claim 5, **characterised in that** the remote control (40) comprises as least one second actuating device (42) to which a back control signal is assigned, wherein the control unit (20) is designed, on receiving the back control signal, to determine a conveying direction, in which the at least one cargo item (30) is conveyed away from the remote control position, and actuates the freight conveying devices (50-50""", 60-60""") in such a manner that the at least one cargo item (30) is transported in the calculated conveying direction.

7. Cargo loading system according to one of claims 3 to 6, **characterised in that** the control unit (20) comprises a distance determination device for determining an actual distance between the cargo item position and the remote control position and is designed to deactivate at least the selected quantity of freight conveying devices (50-50""", 60-60""") if the actual distance is smaller than a specified safety distance.

8. Cargo loading system according to one of the preceding claims, **characterised in that** the control unit (20) is designed, based on the remote control position and the alignment of the remote control (40), to select from a plurality of cargo items (30) one which should be conveyed according to the control signals.

9. Cargo loading system according to one of the preceding claims, **characterised by** a plurality of receiving units (54a, 54b, 54c, 54d, 64) for receiving the control signals which are arranged extensively on the cargo deck (10, 110), wherein the position determination device (23) knows the positions of the receiving units (54a, 54b, 54c, 54d, 64) and, based on the position of the receiving unit (54a, 54b, 54c, 54d, 64) which receives a control signal emitted by the remote control (40), determines the remote control position.

10. Method for controlling a plurality of freight conveying devices (50-50""", 60-60""") of a cargo loading system, comprising the steps:
- Receiving a control signal from a remote control (40);
- Determining at least one remote control position of the remote control (40);
- Determining at least one cargo item position of at least one cargo item (30) on a cargo deck (10, 110);
- Selecting a quantity of freight conveying devices (50-50""", 60-60""") arranged on the cargo deck (10, 110);
- Determining a conveying direction for each freight conveying device (50-50""", 60-60""") from the quantity selected as a function of the control signal, the remote control position and the cargo item position;
- Propelling the freight conveying devices (50-50""", 60-60""") in the relevant conveying direction.

11. Method according to claim 10, **characterised in that** selecting the quantity of freight conveying devices (50-50""", 60-60""") is carried out as a function of the determined remote control position and/or an alignment of the remote control (40).

12. Method according to claim 10 or 11, **characterised in that** determining the remote control position comprises determining a primary receiving unit from a plurality of receiving units (54a, 54b, 54c, 54d, 64) arranged on or close to the cargo deck and identifying the position of the primary receiving unit on the cargo deck (10, 110), wherein the primary receiving unit is the receiving unit (54a, 54b, 54c, 54d, 64) which receives the control signal from the remote control (40).

13. Method according to one of claims 10 to 12, **characterised by** calculating at least one actual distance between the cargo item position and the remote control position, wherein the selected freight conveying devices (50-50""", 60-60""") are only propelled if the actual distance is greater than a specified safety distance.

14. Method according to one of claims 10 to 13, **characterised by** calculating at least one cargo distance between a first cargo item (30) and a second cargo item (30), wherein the selected freight conveying devices (50-50""", 60-60""") are only propelled if the calculated cargo distance between the first and the second cargo item (30), between which the remote control (40) is located according to the determined remote control position, is greater than a specified safety distance.

## Revendications

1. Système de chargement de fret, comprenant :
- un plancher de chargement (10, 110) avec une multiplicité de dispositifs de transport de fret (50-50"", 60-60"") ;
- une unité de commande (20), qui est en liaison de communication avec les dispositifs de transport de fret (50-50"", 60-60"") pour le transport d'au moins une pièce de fret (30) sur le plancher de chargement (10, 110) ;
- une commande à distance (40), qui est en liaison de communication avec l'unité de commande (20) pour l'envoi de signaux de commande à l'unité de commande (20) ;
**caractérisé en ce que** l'unité de commande (20) comprend une unité de détermination de position (23) pour la détermination d'une position de commande à distance sur le plancher de chargement (10, 110) et/ou de l'orientation de la commande à distance (40), dans lequel l'unité de commande (20) est configurée pour sélectionner une quantité de dispositifs de transport de fret (50-50"", 60-60"") et pour entraîner ceux-ci en fonction des signaux de commande reçus et de la position de commande à distance et/ou de l'orientation de la commande à distance (40).

2. Système de chargement de fret selon la revendication 1, **caractérisé en ce que** la commande à distance (40) est configurée pour transmettre les signaux de commande au moins en partie sans fil, au moyen d'ondes lumineuses, à l'unité de commande (20).

3. Système de chargement de fret selon l'une quelconque des revendications précédentes, **caractérisé en ce que** l'unité de détermination de position (23) est configurée pour la détermination d'au moins une position de pièce de fret de ladite au moins une pièce de fret (30) sur le plancher de chargement (10, 110), dans lequel l'unité de commande (20) est configurée pour entraîner les dispositifs de transport de fret (50-50"", 60-60"") en fonction des signaux de commande reçus, de la position de commande à distance et/ou de l'orientation de la commande à distance (40) et de la position de ladite au moins une pièce de fret (30).

4. Système de chargement de fret selon la revendication 3, **caractérisé en ce que** le dispositif de commande (20) est configuré pour tenir compte de la position de commande à distance et/ou de l'orientation de la commande à distance (40) par rapport à ladite au moins une pièce de fret (30).

5. Système de chargement selon la revendication 3 ou 4, **caractérisé en ce que** la commande à distance (40) comprend au moins un premier dispositif d'actionnement (41), auquel un signal de commande de suite est associé, dans lequel le dispositif de commande (20) est configuré pour déterminer, à la réception du signal de commande de suite, une direction de transport dans laquelle ladite au moins une pièce de fret (30) est transportée en direction de la position de commande à distance, et commande les dispositifs de transport (50-50"", 60-60"") d'une manière telle que ladite au moins une pièce de fret (30) soit transportée dans la direction de transport calculée.

6. Système de chargement de fret selon la revendication 5, **caractérisé en ce que** la commande à distance (40) comprend au moins un deuxième dispositif d'actionnement (42), auquel un signal de commande de retour est associé, dans lequel le dispositif de commande (20) est configuré pour déterminer, à la réception du signal de commande de retour, une direction de transport dans laquelle ladite au moins une pièce de fret (30) est transportée dans une direction s'éloignant de la position de commande à distance, et commande les dispositifs de transport (50-50"", 60-60"") d'une manière telle que ladite au moins une pièce de fret (30) soit transportée dans la direction de transport calculée.

7. Système de chargement de fret selon l'une quelconque des revendications 3 à 6, **caractérisé en ce que** le dispositif de commande (20) comprend un dispositif de détermination de distance pour la détermination d'une distance réelle entre la position de la pièce de fret et la position de commande à distance et est configurée pour désactiver au moins la quantité sélectionnée de dispositifs de transport de fret (50-50"", 60-60"") lorsque la distance réelle est inférieure à une distance de sécurité prédéterminée.

8. Système de chargement de fret selon l'une quelconque des revendications précédentes, **caractérisé en ce que** le dispositif de commande (20) est configuré pour sélectionner, à l'aide de la position de commande à distance et de l'orientation de la commande à distance (40), parmi une multiplicité de pièces de fret (30), celle qui doit être transportée selon les signaux de commande.

9. Système de chargement de fret selon l'une quelconque des revendications précédentes, **caractérisé par** une multiplicité d'unités de réception (54a, 54b, 54c, 54d, 64) destinées à recevoir les signaux de commande, qui sont disposées en recouvrant la surface sur le plancher de chargement (10, 110), dans lequel le dispositif de détermination de position (23) connaît les positions des unités de réception (54a, 54b, 54c, 54d, 64) et, à l'aide de la position de l'unité de réception (54a, 54b, 54c, 54d, 64), qui reçoit un signal de commande émis par la commande à distance (40), détermine la position de commande à distance.

10. Procédé de commande d'une multiplicité de dispositifs de transport de fret (50-50"", 60-60"") d'un système de chargement de fret, comprenant les étapes suivantes :
- réception d'un signal de commande depuis une commande à distance (40) ;
- détermination d'au moins une position de commande à distance de la commande à distance (40) ;
- détermination d'au moins une position de pièce de fret d'au moins une pièce de fret (30) sur un plancher de chargement (10, 110) ;
- sélection d'une quantité de dispositifs de transport de fret (50-50"", 60-60"") disposés sur le plancher de chargement (10, 110) ;
- détermination d'une direction de transport pour chaque dispositif de transport de fret (50-50"", 60-60"") parmi la quantité sélectionnée en fonction du signal de commande reçu, de la position de commande à distance et de la position de la pièce de fret ;
- entraînement des dispositifs de transport de fret (50-50"", 60-60"") dans la direction de transport respective.

11. Procédé selon la revendication 10, **caractérisé en ce que** l'on opère la sélection de la quantité de dispositifs de transport de fret (50-50"", 60-60"") en fonction de la position déterminée de commande à distance et/ou d'une orientation de la commande à distance (40).

12. Procédé selon la revendication 10 ou 1 l, **caractérisé en ce que** la détermination de la position de commande à distance comprend une détermination d'une unité de réception primaire parmi une multiplicité d'unités de réception (54a, 54b, 54c, 54d, 64) disposées sur le ou près du plancher de chargement et une détermination de la position de l'unité de réception primaire sur le plancher de chargement (10, 110), dans lequel l'unité de réception primaire est l'unité de réception (54a, 54b, 54c, 54d, 64) qui reçoit le signal de commande de la commande à distance (40).

13. Procédé selon l'une quelconque des revendications 10 à 12, **caractérisé par** un calcul d'une distance réelle entre la position de pièce de fret et la position de commande à distance, dans lequel les dispositifs de transport de fret sélectionnés (50-50"", 60-60"") ne sont entraînés que lorsque la distance réelle est plus grande qu'une distance de sécurité prédéterminée.

14. Procédé selon l'une quelconque des revendications 10 à 13, **caractérisé par** un calcul d'au moins une distance de chargement entre une première pièce de fret (30) et une deuxième pièce de fret (30), dans lequel les dispositifs de transport de fret sélectionnés (50-50"", 60-60"") ne sont entraînés que lorsque la distance de chargement calculée entre la première et la deuxième pièce de fret (30), entre lesquelles la commande à distance (40) se trouve, selon la position de commande à distance déterminée, est plus grande qu'une distance de sécurité prédéterminée.
